# EUROPÄISCHE PATENTANMELDUNG

(11) **EP 1 039 248 A2**
(43) Veröffentlichungstag der Anmeldung: **27.09.2000**
(21) Anmeldenummer: 00105272.9
(22) Anmeldetag: 14.03.2000
(51) Int. Cl.: F24H 8/00, F24H 9/00, F24H 1/36

(54) **Heizgerät mit einem durch ein Brennstoff-Luftgemisch gespeisten Brenner**

(30) Priorität: 19.03.1999 DE 19912581
(71) Anmelder: ROBERT BOSCH GMBH, 70442 Stuttgart (DE)
(72) Erfinder: Besser, Ulrich, 73230 Kirchheim (DE); Stein, Petra, 73207 Plochingen (DE); Plothe, Michael, 73230 Kirchheim (DE); Boettcher, Arno, 70190 Stuttgart (DE); Knobloch, Rolf, 73230 Kirchheim (DE)

(57) **Zusammenfassung**

Die Erfindung betrifft ein Heizgerät mit einem durch einen Brennstoff-Luftgemisch gespeisten Brenner (10), einer Brennkammer (12)und einer Wärmetauschereinheit (14), in welchem das Verbrennungsgas mindestens im unteren Leistungsbereich des Heizgeräts unter den Taupunkt des Wasserdampfs abkühlt, ferner mit einer Bypasseinrichtung (20), die zur Rückerwärmung des Abgases auf einen für Kamin- bzw. Außenwendanschluß zulässigen Wert durch Wärmezufuhr aus dem Verbrennungsgas die Brennkammer (12) mit einer Abgasabführung (18) verbindet. Es wird vorgeschlagen, daß die Bypasseinrichtung (20) einen Bypasskanal (30, 42) aufweist, der von einem Wärmeleitelement (32) umgeben ist, das thermisch an die Wärmetauschereinheit (14) angebunden ist. Damit wird eine lastunabhängige konstante Anhebung der Abgastemperatur erreicht, ohne daß dafür den heißen Verbrennungsgasen ausgesetzte Stellglieder notwendig sind.

## Beschreibung

### Stand der Technik

Die Erfindung geht aus von einem Heizgerät nach den Gattungsmerkmalen des Hauptanspruchs. Bei Heizgeräten, welche die Kondensationswärme des im Verbrennungsgas enthaltenen Wasserdampfes nutzen bzw. bei welchem das Abgas auf einen unter Taupunkttemperatur von ca. 55 °C liegenden Wert abgekühlt ist, muß das Abgas nach dem Verlassen des Wärmeübertragers wieder auf eine Temperatur hinter dem Gerät von mindestens 80 °C erwärmt werden, damit die Abgasabführung kondensatfrei bleibt. In der DB 296 18 380 wird ein gattungsgemäßes Heizgerät vorgeschlagen, bei dem mit Hilfe eines über einen die Brennkammer mit einem Abgasraum verbindenden Bypasskanals eine Rückerwärmung der Abgase erfolgt. Der wirksame Strömungsquerschnitt des Bypasskanals wird über am Bypasskanal angeordnete Stellelemente lastabhängig und/oder abhängig von der Temperatur des erhitzten Mediums gesteuert.

### Vorteile der Erfindung

Durch die erfindungsgemäße Maßnahme nach den Merkmalen des Hauptanspruchs erfolgt eine Anhebung der Abgastemperatur, ohne daß dafür Stellglieder für die Regelung des Bypasskanals vorgesehen sind. Durch das den Bypasskanal umgebende Wärmeleitelement, das thermisch an die Wärmetauschereinheit angebunden ist, wird erreicht, daß mit steigender Last sich die Temperatur der durch den Bypasskanal strömenden heißen Verbrennungsgase nicht, oder nicht wesentlich erhöht, da ein Teil der Wärmeenergie der Verbrennungsgase an die Wärmetauschereinheit zurückfließt. Damit ist gewährleistet, daß auf einfache Art und Weise die Abgastemperatur trotz steigender Brennerlast auf eine im wesentlichen konstante Abgas-Mischtemperatur angehoben wird.

Ein Teil des Bypasskanals ist als hochtemperaturbeständiger zylindrischer Stutzen ausgebildet, der in einer Bohrung des Wärmeleitelements angeordnet ist.

Es hat sich in der Praxis gezeigt, daß mit steigender Last der Massenstromanteil der über den Bypasskanal in die Abgasabführung strömenden Verbrennungsgase zunimmt, da sich der Strömungswiderstand für die über die Wärmetauschereinheit strömenden Verbrennungsgase vergrößert. Um diesem Effekt entgegen zu wirken, wird vorgeschlagen, zwischen dem zylindrischen Stutzen und der Bohrung des Wärmeleitelements einen Luftspalt anzuordnen. Die vom aufgeheizten zylindrischen Stutzen ausgehende Wärmeabstrahlung an das Wärmeleitelement bewirkt eine zusätzliche Kühlung der Verbrennungsgase, so daß trotz eines größeren Bypassmassenstroms die Anhebung der Abgas-Mischtemperatur im wesentlichen konstant bleibt.

Der zylindrische Stutzen weißt eine Lasche auf, die mit einer in der Bohrung des Wärmeleitelements vorgesehenen Nut korrespondiert, so daß gewährleistet ist, daß der zylindrische Stutzen verdrehsicher in der Bohrung gehalten ist.

Der Bypass-Strom der heißen Verbrennungsgase wird mit Hilfe einer zweiten im Wärmeleitelement angeordneten Bohrung in die Abgasabführung gelenkt, wobei beide Bohrungen im wesentlichen senkrecht zueinander ausgerichtet sind und miteinander in Verbindung stehen.

Die Anbindung der Abgasabführung an das Wärmeleitelement erfolgt mit Hilfe einer in der zweiten Bohrung eingepreßten Hülse.

Der zylindrische Stutzen weist eine radiale Öffnung auf, die der Öffnung der Hülse gegenüber liegt, so daß die heißen Verbrennungsgase über den zylindrischen Stutzen und über die Hülse in die Abgasabführung gelangen können.

Das Wärmeleitelement wird in vorteilhafter Weise mit seinem geraden Wandabschnitt an der Wärmetauschereinheit angeschraubt. Da während des Betriebs des Heizgeräts in der Brennkammer Überdruck herrscht, ist für die Abdichtung des Wärmeleitelements gegenüber der Wärmetauschereinheit im geraden Wandabschnitt des Wärmeleitelements eine Ringnut vorgesehen, in der ein Dichtungselement Aufnahme findet.

### Zeichnung

Zwei Ausführungsbeispiele der Erfindung sind in der Zeichnung schematisch dargestellt und in der nachfolgenden Beschreibung näher erläutert:

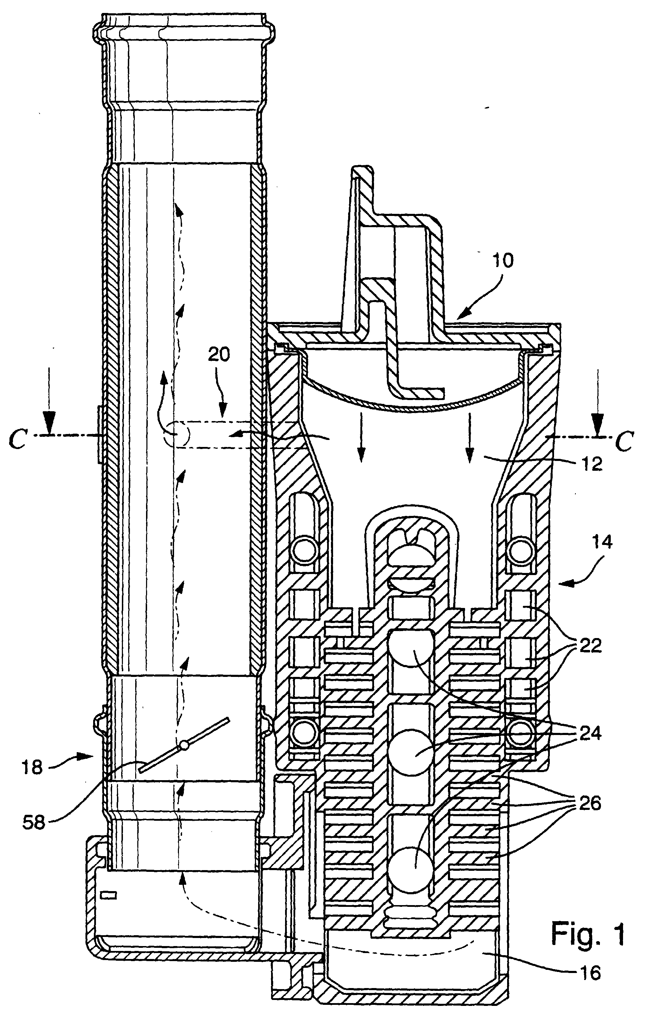

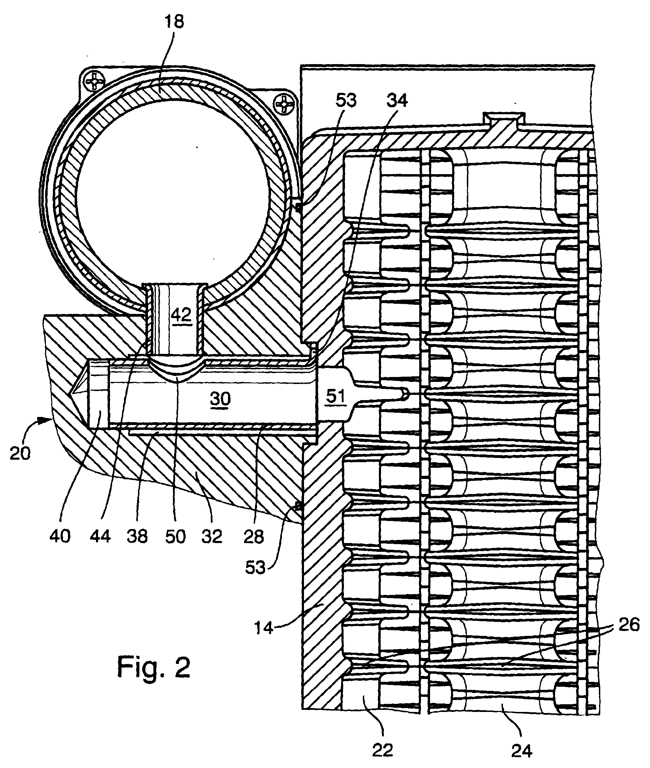

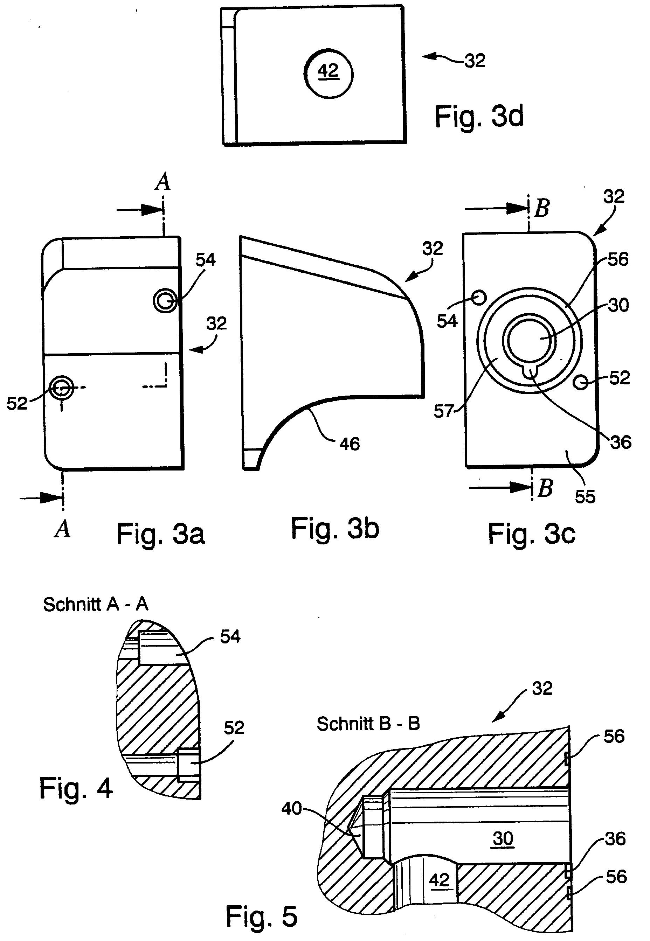

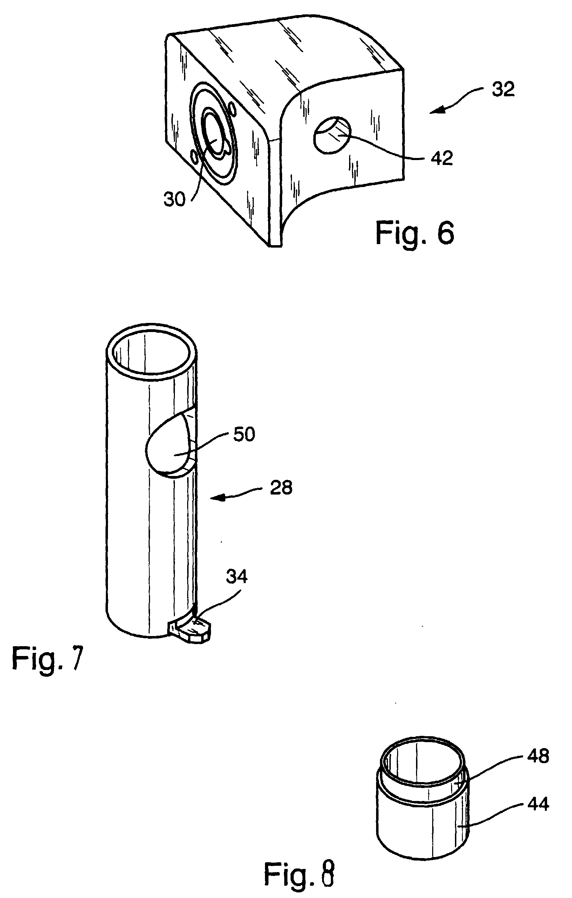

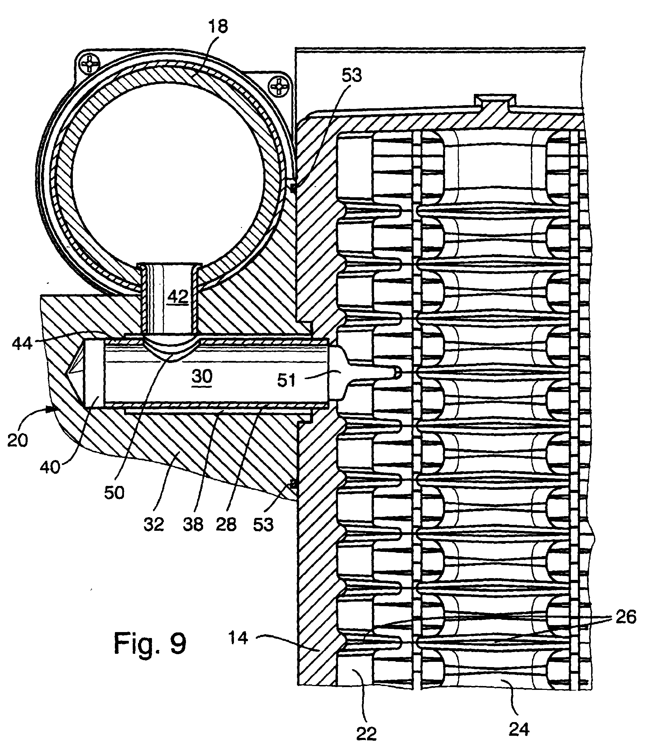

Figur 1 zeigt die Gesamtdarstellung eines Heizgerätes mit einer Bypasseinrichtung, Figur 2 eine vergrößerte Schnittdarstellung entlang der Linie C-C in Figur 1, Figur 3 verschiedene Teilansichten eines Wärmeleitelements, Figur 4 einen Schnitt entlang der Linie A-A in Figur 3A, Figur 5 einen Schnitt entlang der Linie B-B in Figur 3C, Figur 6 eine perspektivische Gesamtansicht des Wärmeleitelements, Figur 7 einen zylindrischen Stutzen für einen Bypasskanal, Figur 8 eine Hülse für die Anbindung eines Abgasrohres an das Wärmeleitelement und Figur 9 eine zweite Ausführungsform der Bypasseinrichtung.

### Beschreibung der Ausführungsbeispiele

Das Heizgerät nach Figur 1 hat einen Brenner 10, dem ein Brenngas-Luftgemisch durch ein nicht dargestelltes Gebläse zugeführt wird. Der Brenner 10 sitzt am oberen Ende einer Brennkammer 12, die durch eine Wärmetauschereinheit 14 nach unten und seitlich abgeschlossen ist. Stromab der Wärmetauschereinheit 14 ist ein Abgasraum 16 angeordnet, an dessen tiefster Stelle eine nicht dargestellte Kondensatabführung vorgesehen ist. Der Abgasraum 16 ist stromab als Abgasabführung in Form eines Abgasrohres 18 ausgebildet, das nach oben zu einem nicht mehr dargestellten Kamin- bzw. Außenwandanschluß geführt ist. Die Brennkammer 12 ist mit einer Bypasseinrichtung 20 verbunden, deren Bypasskanal unter Umgehung der Wärmetauschereinheit 14 unmittelbar in das Abgasrohr 18 einmündet. Die Wärmetauschereinheit 14 weist wasserführende Kanäle 22, 24 auf, so daß das darin strömende Wasser durch die heißen Verbrennungsgase, die entlang von Rippen 26 in Richtung des Abgasraumes 16 strömen, erhitzt wird. Die durch die Wärmetauschereinheit 14 abgekühlten Abgase strömen über den Abgasraum 16 in das Abgasrohr 18, das die Abgase schlußendlich ins Freie führt.

Im folgenden wird der Aufbau der Bypasseinrichtung 20 anhand der Figuren 2 bis 8 näher beschrieben. Die Bypasseinrichtung 20 weist einen geraden zylindrischen Stutzen 28 aus temperaturfestem Stahl auf, der in einer ersten Bohrung 30 innerhalb eines großvolumig ausgebildeten Wärmeleitelements 32 angeordnet ist. Der zylindrische Stutzen 28 ist lose, aber formschlüssig in dem vorzugsweise aus Aluminium ausgebildeten Wärmeleitelement 32 angeordnet. Der zylindrische Stutzen 28 weist an seinem der Wärmetauschereinheit 14 zugeordneten Ende eine Lasche 34 auf, die in einer in der Bohrung 30 eingebrachten Nut 36 Aufnahme findet, so daß der zylindrische Stutzen 28 verdrehsicher in der Bohrung 30 des Wärmeleitelements 32 gehalten ist. Der Durchmesser der Bohrung 30 und der Außendurchmesser des zylindrischen Stutzens 28 ist so gewählt, daß zwischen dem zylindrischen Stutzen 28 und dem Wärmeleitelement 32 ein Ringepalt 38 verbleibt.

Die sichere Lagerung des zylindrischen Stutzens 28 in der Bohrung 30 wird dadurch gewährleistet, daß in der Bohrung 30 ein verjüngter Endabschnitt 40 vorgesehen ist, in dem der zylindrische Stutzen 28 gelagert ist.

Im Wärmeleitelement 32 ist eine zweite Bohrung 42 vorgesehen, die mit der ersten Bohrung 30 in Verbindung steht und senkrecht zur ersten Bohrung 30 ausgerichtet ist. In die zweite Bohrung 42 ist eine Hülse 44 aus Aluminium eingepreßt, mit deren Hilfe das Abgasrohr 18 am Wärmeleitelement 32 befestigt wird. Dazu weist eine Seite des Wärmeleitelements 32 einen kreisförmigen Mantelabschnitt 46 auf, dessen Krümmungsradius im wesentlichen dem Außenradius des Abgasrohres 18 entspricht. Die Hülse 44 ist mit einem verjüngten Abschnitt 48 versehen, der, nachdem das Abgasrohr 18 mit einer an seiner Mantelfläche vorgesehenen Öffnung auf die Hülse 44 gesteckt wurde, umgebördelt wird, so daß das Abgasrohr 18 formschlüssig und dicht mit dem Wärmeleitelement 32 verbunden ist. Der zylindrische Stutzen 28 hat eine radiale Öffnung 50, die der Öffnung der Hülse 44 senkrecht gegenüberliegt. Damit ist über eine in der Wärmetauschereinheit 14 vorgesehene Öffnung 51 ein von der Brennkammer 12 ausgehender Bypasskanal geschaffen, der über die im zylindrischen Stutzen 28 vorgesehene radiale Öffnung 50 und über die dazu senkrecht angeordnete Hülse 44 in das Abgasrohr 18 führt.

Das Wärmeleitelement 32 wird mittels nicht dargestellter Zylinderschrauben und am Wärmeleitelement 32 vorgesehenen Durchgangsbohrungen 52, 54 an der Wärmetauschereinheit 14 angeschraubt. Da während des Betriebs des Heizgeräts in der Brennkammer 12 Überdruck herrscht, wird das Wärmeleitelement 32 gegenüber der Wärmetauschereinheit 14 mit einer Ringdichtung 53 abgedichtet. Dafür ist an einem geraden Wandabschnitt 55 des Wärmeleitelements 32 eine entsprechende Ringnut 56 vorgesehen. Da die Ringnut 56 vom Bypasskanal entfernt angeordnet ist und der zwischen der Bohrung 30 und der Ringnut 56 verbleibende Ringabschnitt 57 für eine gute Wärmeableitung an die Wärmetauschereinheit 14 sorgt, ist die Temperaturbelastung für die Ringdichtung 53 aufgrund des heißen Bypasskanals bzw. des heißen zylindrischen Stutzens 28 nur gering.

Die Bypasseinrichtung 20 zur Anhebung der Abgastemperatur am Ende des Abgasrohres 18 auf eine Temperatur von mindestens 80 °C funktioniert auf folgende Art und Weise:

Bei der Verbrennung in der Brennkammer 12 gelangt ein Teil der heißen Verbrennungsgase über den in der Bypasseinrichtung 20 vorgesehenen Bypasskanal in das Abgasrohr 18, wodurch die Abgastemperatur in gewünschter Weise angehoben wird. Das System ist dabei so ausgelegt bzw. dimensioniert, daß im unteren Leistungsbereich des Brenners 10 die Abgastemperatur nach Zumischung der heißen Verbrennungsgase den vorgeschriebenen Minimalwert von 80 °C nicht wesentlich übersteigt. Da sich mit zunehmender Last aufgrund der geringeren mittleren Dichte der Strömungswiderstand für die Verbrennungsgase, die entlang der Rippen 30 in Richtung des Albgasraumes 16 strömen, überproportional erhöht, wird ein größerer Massenstromanteil der Verbrennungsgase über die Bypasseinrichtung 20 in das Abgasrohr 18 eingeleitet. Darüberhinaus erhöht sich mit zunehmender Brennerleistung auch die Temperatur der Verbrennungsgase. Aufgrund der großvolumigen Ausbildung des Wärmeleitelements 32 und dessen thermischer Anbindung an die Wärmetauschereinheit 14 wird jedoch proportional zur Brennerlast ein größerer Wärmestrom über Wärmeleitung an die Wärmetauschereinheit 14 und seine wasserführenden Kanäle 22 zurückgeführt. Damit wird den Verbrennungsgasen, die über die Bypasseinrichtung 20 in das Abgasrohr 18 strömen, Wärmeenergie entzogen, so daß insgesamt trotz steigender Brennerlast keine weitere Anhebung der Abgastemperatur erfolgt. Der Wärmeentzug für die über den Bypasskanal gelangenden Verbrennungsgase wird mit Hilfe des zwischen dem zylindrischen Stutzen 28 und dem Wärmeleitelement 32 vorgesehenen Ringspalts 38 weiter verstärkt, da die Wärmeabstrahlung bei Nennlast deutlich größer ist als im Teillastbereich. Dadurch wird der bei Nennleistung entsprechend größere Bypassmengenstrom stärker abgekühlt und die Abgas-Mischtemperatur im Abgasrohr 18 im wesentlichen konstant gehalten.

Figur 9 zeigt ein zweites Ausführungsbeispiel der Bypasseinrichtung 20 bei der das eine Ende des zylindrischen Stutzens 28 in die Wärmetauschereinheit 14 eingepreßt ist. Damit kann die thermische Anbindung an die heißen Verbrennungsgase und damit der Selbstregelungseffekt durch die lastabhängige Abstrahlung an das Wärmeleitelement 32 noch weiter verbessert werden.

Die Bypasseinrichtung 20 ist seitlich vor dem Abgasrohr 18 angeordnet und damit für die Montage bzw. Demontage gut zugänglich.

Zur Regelung des Verhältnisses zwischen dem über die Wärmetauschereinheit 14 in das Abgasrohr 18 gelangenden Abgasmassenstrom und dem über die Bypasseinrichtung 20 in das Abgasrohr 18 gelangenden Bypassmassenstrom ist im Abgasrohr 18 stromauf der Bypasseinrichtung 20 eine Regelklappe 58 vorgesehen.

## Patentansprüche

1. Heizgerät mit einem durch ein Brennstoff-Luftgemisch gespeisten Brenner, einer Brennkammer und einer Wärmetauschereinheit, in welchem das Verbrennungsgas mindestens im unteren Leistungsbereich des Heizgeräts unter den Taupunkt des Wasserdampfes abkühlt, ferner mit einer Bypasseinrichtung, die zur Rückerwärmung des Abgases auf einen für Kamin-bzw. Außenwandanschluß zulässigen Wert durch Wärmezufuhr aus dem Verbrennungsgas die Brennkammer mit einer Abgasabführung verbindet, dadurch gekennzeichnet, daß die Bypasseinrichtung (20) einen Bypasskanal (30, 42) aufweist, der von einem Wärmeleitelement (32) umgeben ist, das thermisch an die Wärmetauschereinheit (14) angebunden ist.

2. Heizgerät nach Anspruch 1, dadurch gekennzeichnet, daß die Bypasseinrichtung (20) einen zylindrischen Stutzen (28) aufweist, der in einer Bohrung (30) des Wärmeleitelements (20) angeordnet ist.

3. Heizgerät nach Anspruch 1 oder 2, dadurch gekennzeichnet, daß der zylindrische Stutzen (28) unter Beibehaltung eines Ringspaltes (38) in der Bohrung (30) des Wärmeleitelements (28) angeordnet ist.

4. Heizgerät nach Anspruch 3, dadurch gekennzeichnet, daß der zylindrische Stutzen (28) eine Lasche (34) aufweist, die mit einer in der Bohrung (30) des Wärmeleitelements (32) vorgesehenen Nut (36) korrespondiert, so daß der zylindrische Stutzen (28) verdrehsicher in der Bohrung (30) gehalten ist.

5. Heizgerät nach einem der Ansprüche 2 bis 4, dadurch gekennzeichnet, daß das Wärmeleitelement (32) eine zweite Bohrung (42) aufweist, die zur ersten Bohrung (30) im wesentlichen senkrecht ausgerichtet ist und mit ihr in Verbindung steht.

6. Heizgerät nach Anspruch 5, dadurch gekennzeichnet, daß die Abgasabführung (18) am Wärmeleitelement (32) mit Hilfe einer in der zweiten Bohrung (42) des Wärmeleitelements (32) eingepreßten Hülse (44) erfolgt.

7. Heizgerät nach Anspruch 6, dadurch gekennzeichnet, daß der zylindrische Stutzen (28) eine radiale Öffnung (50) aufweist, die unter Einhaltung eines Abstandes, vorzugsweise des Ringspalt (38) -Abstandes, der Öffnung der Hülse (44) gegenüberliegt, so daß die heißen Verbrennungsgase über den zylindrischen Stutzen (28) und über die Hülse (44) in die Abgasabführung (18) gelangen können.

8. Heizgerät nach einem der vorhergehenden Ansprüche, dadurch gekennzeichnet, daß das Wärmeleitelement (32) einen kreisförmigen Mantelabschnitt (46) aufweist, der für die Befestigung des Abgasrohres (18) an das Wärmeleitelement (32) vorgesehen ist.

9. Heizgerät nach einem der vorhergehenden Ansprüche, dadurch gekennzeichnet, daß das Wärmeleitelement (32) einen geraden Wandabschnitt (55) aufweist, der mit der Wärmetauschereinheit (14) verschraubt ist.

10. Heizgerät nach Anspruch 9, dadurch gekennzeichnet, daß zur Abdichtung des Wärmeleitelements (32) gegenüber der Wärmetauschereiriheit (14) der gerade Wandabschnitt (55) des Wärmeleitelements (32) eine Ringnut (56) für ein Dichtungselement (53) aufweist.
